Europäisches Patentamt

(19) European Patent Office

Office européen des brevets

(11) Publication number: **0 037 533**
**B1**

## (12) EUROPEAN PATENT SPECIFICATION

(45) Date of publication of patent specification: **01.08.84**

(51) Int. Cl.³: **F 16 K 27/00, F 16 L 15/00**

(21) Application number: **81102307.6**

(22) Date of filing: **26.03.81**

(54) **Plastic valve.**

(30) Priority: **31.03.80 JP 43330/80**

(43) Date of publication of application:
**14.10.81 Bulletin 81/41**

(45) Publication of the grant of the patent:
**01.08.84 Bulletin 84/31**

(84) Designated Contracting States:
**CH DE FR GB IT LI NL**

(56) References cited:
**US - A - 2 988 385**
**US - A - 3 438 657**
**US - A - 3 545 794**
**US - A - 3 700 268**

(73) Proprietor: **SEKISUI KAGAKU KOGYO KABUSHIKI KAISHA**
**2-4-4 Nishitenma**
**Kita-ku Osaka (JP)**

(72) Inventor: **Kato, Shigenobu**
**15-1 Negishidai 3-chome**
**Asaka-shi, Saitama-ken (JP)**

(74) Representative: **Grupe, Peter, Dipl.-Ing.**
**Patentanwaltsbüro Tiedtke-Bühling-Kinne-Grupe-**
**Pellmann Bavariaring 4**
**D-8000 München 2 (DE)**

Courier Press, Leamington Spa, England.

## Description

This invention relates to a valve formed of synthetic resinous material according to the precharacterizing part of claim 1.

In a known valve of this kind, the seat is an integral part of the cylindrical body cap and extends radially outwardly from the cylindrical surface of the body cap to be engaged by a holding bottom of the cap nut. In coupling the body cap to the body, the body cap is inserted into the cap nut and then the cap nut is screwed to the body. As a result, the holding bottom of the cap nut causes the seat of the body cap to be pressed against the end surface of the body thereby achieving intimate coupling between the body and the body cap.

In such a conventional valve, it is necessary before securing the flange portion of the body cap, to put the cap nut around the body cap from the flange-securing side of the body cap and then to weld or screw the flange portion to the body cap. For this reason, the flange and the body cap cannot be built as an integral unit, with the result that the strength of the flange-securing portion of the body cap is reduced and cracks tend to form at this portion. Moreover, the number of valve assembling steps naturally increases.

Furthermore, upon engagement between the holding bottom and the seat, a shearing force is acting on the seat being an integral part of the body cap. In a valve formed of a synthetic resin, the above shear force brings about creep deformation thereby to weaken the screwing force of the cap nut and to cause leakage of the fluid flowing through the valve.

It is an object of this invention to provide a valve as described in the precharacterizing part of claim 1 which can be built by a lesser number of assembling steps than in the case of the conventional valve of this type, which can be disassembled more easily than the conventional valves, and which may have higher strength than the conventional valves of this type, because its flange portion and body cap can be molded as an integral unit.

This object is achieved by applying the features as described in the characterizing part of claim 1. Apart from removing the aforesaid defect of the conventional valve, a shearing force is reduced when the valve is assembled since the radially extending front end surface of the ring element comes to lie in said first plane to be pressed against the end surface of the body.

Further improvements may be derived from the subclaims, the features thereof relating to the assembling of the ring-like element and the body cap.

It is known from a coupling (US—A—3 438 657) to use with body caps ring-like elements. In this known case each body cap cooperates with two ring-like elements on either side of an O-ring. When the body cap is coupled to the body with the cap nut, the latter engages one of the ring-like elements as the seat while the other ring-like element comes to form the same plane as the front end face of the body cap.

With reference to the accompanying drawings, the present invention is described in detail.

Figure 1 is a partially sectional view showing one embodiment of the valve in accordance with this invention;

Figure 2 is a perspective view showing constituent members in the valve shown in Figure 1; and

Figure 3 is a perspective view showing constituent members in another embodiment of the valve of the invention.

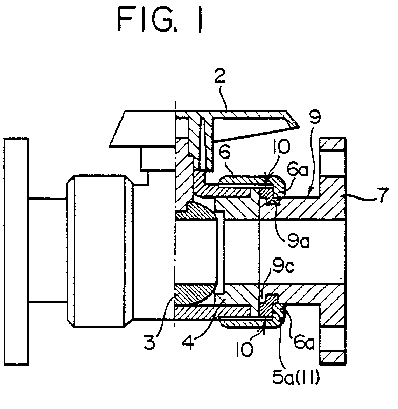

In Figure 1, the reference numeral 1 represents a body; 2, a handle; 3, a ball; 4, a union; 9, a body cap or cylindrical element; 6, a cap nut; 6a, an annular holding bottom of the cap nut 6; 7, a flange. The cylindrical element 9 is integral with the flange 7 at its one end. The cylindrical element 9 also has — at its other end — an annular groove 9a of the predetermined width and depth formed circumferentially and spaced from an end surface A by a predetermined distance in the axial direction. A portion 9c lies between the end surface A and the annular groove 9a.

A ring-like element to be coupled to the element 9 is shown at 10. It is a one-piece element consisting of a small-diameter portion 10a adapted to be fitted into the annular groove 9a and a large-diameter portion 10b surrounding and adapted to contact the peripheral surface of the portion 9c. The ring-like element 10 is cut axially at one site, to form two cut ends 101 and 102.

The ring-like element 10 further has a rear wall 11 which extends radially outwardly from the cylindrical element when the ring-like element 10 is coupled with the body cap 9. The inside diameter of the small-diameter portion 10a is substantially equal to the diameter of the base annular groove 9a of the cylindrical element, and the width of the small-diameter portion 10a is substantially equal to that of the annular groove 9a. It is necessary on the other hand that the outside diameter of the large-diameter portion 10b should not be larger than the inside diameter of the cap nut 6. When the ring-like element is coupled to the cylindrical element, the coupling end surface of the large-diameter portion 10b is on the same plane as the coupling end surface A of the cylindrical element.

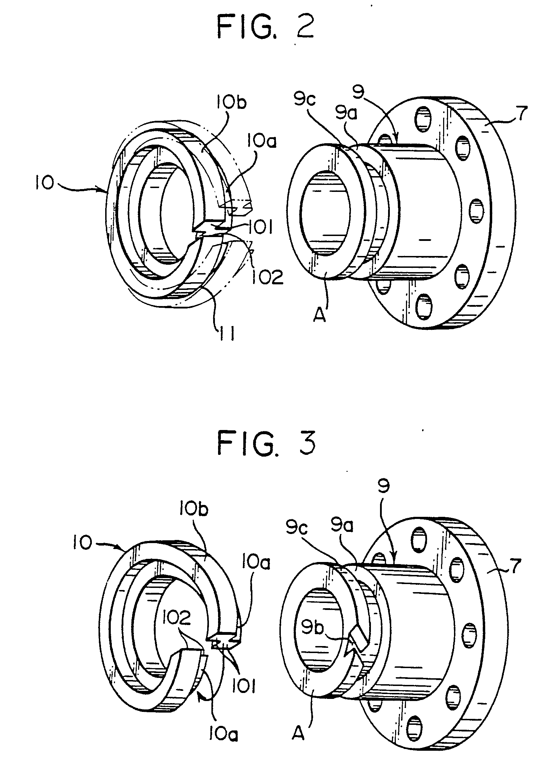

The ring-like second element 10 is coupled to the cylindrical element after putting the cap nut 6 around the cylindrical element from the end surface A. Coupling is effected by applying to the ring-like element 10 a force tending to move the two cut ends 101 and 102 of the ring-like element 10 away from each other, thereby temporarily enlarging the diameter of the ring-like element 10 (the enlarged state is shown by a dotted line in Figure 2), and then fitting the small-diameter portion 10a into the annular groove 9a by putting it over the cylindrical element beyond the end portion 9c. Upon the fitting of the small-diameter portion 10a into the annular groove 9a, the inner surface of the large-diameter portion 10b contacts the outside surface of the portion 9c. A seat 5a is formed by the rear wall 11 of the ring-like element.

The threaded inner surface of the cap nut 6 is screwed to the threaded outside surface of the body and the cap nut 6 is advanced toward the body 1 until the holding bottom 6a of the cap nut 6 abuts the seat 5a, whereby the body is closely coupled to the body cap.

Another specific embodiment of the body cap in accordance with this invention is shown in Figure 3. In Figure 3, the ring-like element 10 is shown in the temporarily deformed state which it assumes immediately before coupling to the cylindrical element 9.

The cylindrical element constituting the body cap in Figure 3 is the same as the cylindrical element in Figure 2 except that a recess 9b inclined to the axis of the cylindrical element is formed in the portion 9c. The recess 9b is formed such that it communicates with the annular groove 9a, and the bottom surface of the recess 9b is on the same level as the bottom surface of the annular groove 9a. The ring-like element 10 in Figure 3 is cut axially at one site as in Figure 2 to form cut ends 101 and 102. The ring-like element is coupled to the cylindrical element by temporarily deforming the ring-like element 10 so that the cut end 101 axially moves away from the cut end 102 as shown in Figure 3, inserting the cut end 101 through the recess 9b of the cylindrical element from the end surface A, and then rotating the ring-like element 10 in a direction shown by an arrow in Figure 3. As a result, the small-diameter portion 10a of the ring-like element is fitted into the annular groove 9a of the cylindrical element, and the inner surface of the large-diameter portion 10b of the ring-like element contacts the outside surface of the portion 9c of the cylindrical element, whereby a seat 5a of the body cap is formed in the same way as in Figure 2.

The synthetic resin which constitutes the valve of this invention may, for example, include vinyl chloride resins, chlorinated vinyl chloride resins, polypropylene, and fluorocarbon resins, the vinyl chloride resins being especially preferred.

## Claims

1. A valve formed of synthetic resinous material including a body (1, 4) having an end surface and a threaded peripheral surface and a body cap (9) having a cylindrical element with a flange portion (7) at one end and a seat (5a) at the other end, the body cap being coupled to the body (4) by screwing a cap nut (6) to the threaded peripheral surface of the body, said cap nut movably surrounding the peripheral surface of the body cap and engaging the seat to hold the body to the body cap at the end surface of the body, characterized in that the body cap includes an end portion (9c) of the cylindrical element located at the other end of the body cap and having a free front end face (a) formed in a first plane facing the end surface of the body (1), the body cap having an annular groove (9a) in its peripheral surface adjacent to said end portion (9c), the body cap further comprising a ring-like element (10) including a small diameter portion (10a) fittable into said groove (9a), said small diameter portion having a first cylindrical inner surface having a first inner diameter, said ring-like element further comprising a large diameter portion (10b) having a second cylindrical inner surface having a second inner diameter greater than said first inner diameter and having a radially extending front end surface, said ring-like element having such dimensions that when said small diameter portion is fitted in said annular groove, said second cylindrical inner surface contacts the outer peripheral surface of said end portion (9c) and said radially extending front end surface lies in said first plane, said ring-like element having an axial cut defining two separable confronting surfaces (101, 102), whereby said ring-like element is deformable around said cylindrical element to fit said small diameter portion (10a) into said annular groove (9a) and position said large diameter portion (10b) on said end portion (9c), said ring-like element further having a rear wall (11) forming the seat (5a) extending radially between the peripheral surfaces of the portions (10a, 10b) of said ring-like element and facing the one end of the body cap.

2. A valve according to claim 1, characterized in that the cylindrical element (9) is coupled to the ring-like element (10) by temporarily enlarging said ring-like element in the diametrical direction and putting the deformed ring-like element around the cylindrical element such that the small-diameter portion (10a) moves past the disengagement-preventing portion (9c) and fits into the annular groove (9a) of the cylindrical element.

3. A valve according to claim 1, characterized in that a recess (9b) is provided in the disengagement-preventing portion (9c) of the cylindrical element (9) obliquely to the axial direction of said element, and the cylindrical element is coupled to the ring-like element by temporarily deforming one cut end portion of the ring-like element in the axial direction with respect to the outer cut end, inserting the said one cut end through the oblique recess of the cylindrical element, and rotating the ring-like element relative to the cylindrical element.

## Patentansprüche

1. Ventil aus synthetischem, harzartigem Werkstoff mit einem Teil (1, 4) mit einer Endfläche und einer mit Gewinde versehenen Umfangsfläche, und mit einer Gehäusekappe (9), die ein zylindrisches Element mit einem Flanschabschnitt (7) an einem Ende und mit einem Sitz (5a) am anderen Ende aufweist, und die mit dem Teil (4) durch Aufschrauben einer Kappenmutter (6) auf die mit Gewinde versehene Umfangsfläche des Teils verbunden ist, wobei die Kappenmutter beweglich die Umfangsfläche der Gehäusekappe umgibt und den Sitz so beaufschlagt, daß das Teil an seiner Endfläche gegen die Gehäusekappe gehalten ist, dadurch gekennzeichnet, daß die Gehäusekappe einen Endabschnitt (9c) des zylindrischen Elements, der an ihrem anderen Ende liegt, umfaßt und eine freie vordere in einer ersten Ebene liegende Stirnfläche (A) hat, die der Endfläche des Teils (1) gegenüberliegt, daß die Gehäusekappe eine ringförmige Nut (9a) in ihrer Umfangsfläche in der Nähe des Endabschnitts (9c) hat, daß die Gehäusekappe ferner ein ringförmiges Element (10) mit einem Abschnitt (10a) mit kleinem Durchmesser umfaßt der in die Nut (9a) einpaßbar ist, daß dieser Abschnitt (10a) eine erste zylindrische innere Fläche mit einem ersten inneren Durchmesser hat, daß das ringförmige Element ferner einen Abschnitt (10b) mit · großem Durchmesser mit einer zweiten zylindrischen inneren Fläche mit einem zweiten inneren Durchmesser, der ·größer als der erste innere Durchmesser ist, sowie mit einer sich radial erstreckenden vorderen Endfläche umfaßt, daß das ringförmige Element solche Abmessungen hat, daß beim Einsetzen des Abschnitts mit kleinem Durchmesser in die ringförmige Nut die zweite zylindrische innere Fläche äußere Umfangsfläche des Endabschnitts (9c) berührt und daß die sich radial erstreckende vordere Endfläche in der ersten Ebene liegt, daß das ringförmige Element einen axialen Einschnitt hat, der zwei trennbare gegenüberliegende Flächen (101, 102) begrenzt, wodurch das ringförmige Element um das zylindrische Element herum zum Einpassen des Abschnitts (10a) mit kleinem Durchmesser in die ringförmige Nut (9a) und zur Anordnung des Abschnitts (10b) mit großem Durchmesser an dem Endabschnitt (9c) deformierbar ist, und daß das ringförmige Element ferner eine hintere, den Sitz (5a) bildende Wand (11) aufweist, die sich radial zwischen den Umfangsflächen der Abschnitte (10a, 10b) des ringförmigen Elements erstreckt und dem einen Ende der Gehäusekappe gegenüberliegt.

2. Ventil nach Anspruch 1, dadurch gekennzeichnet daß das zylindrische Element (9) mit dem ringförmigen Element (10) verbunden wird, indem das ringförmige Element kurzzeitig in Durchmesserrichtung erweitert und derart deformiert so auf das zylindrische Element gesetzt wird, daß der Abschnitt (10a) mit kleinem Durchmesser sich hinter den Abschnitt (9c), der ein Außereingriffkommen verhindert, bewegt und in die ringförmige Nut (9a) des zylindrischen Elements einpaßt.

3. Ventil nach Anspruch 1, dadurch gekennzeichnet, daß in dem ein Außereingriffkommen verhindernden Abschnitt (9c) des zylindrischen Elements (9) schräg zu dessen Axialrichtung eine Ausnehmung (9b) vorgesehen ist, und daß das zylindrische Element mit dem ringförmigen Element verbunden wird, indem kurzzeitig ein Einschnittsendabschnitt des Ringförmigen Elements bezüglich des äußeren Einschnittsendes in Axialrichtung verformt wird, das eine Einschnittsende durch die schräge Ausnehmung des zylindrischen Elements eingesetzt wird, und indem des ringförmige Element relativ zu dem zylindrischen Element gedreht wird.

## Revendications

1. Vanne constituée de matière résineuse synthétique comprenant un corps (1, 4) ayant une surface terminale et une surface périphérique filetée et un raccord (9) ayant une élément cylindrique avec une bride (7) à sa première extrémité et un siège (5a) à sa deuxième extrémité, le raccord étant relié au corps (4) par vissage d'un écrou de raccord (6) sur la surface périphérique filetée du corps, ledit écrou de raccord entourant la surface périphérique du raccord et s'appuyant sur la siège pour appliquer le corps sur le raccord au droit de la surface terminale du corps, caractérisé en ce que le raccord comporte une partie terminale (9c) de l'élément cylindrique situé à la deuxième extrémité du raccord et ayant une face d'extrémité frontale libre (A) formée dans une premier plan faisant face à la surface terminale du corps (1·), le raccord ayant une rainure annulaire (9a) dans sa surface périphérique adjacente à ladite partie terminale (9c), le raccord comprenant en outre un élément (10) de forme annulaire comprenant une partie (10a) de petit diamètre adaptable dans ladite rainure (9a), ladite partie de petit diamètre ayant une première surface intérieure cylindrique avec un premier diamètre intérieur, ledit élément de forme annulaire comprenant en outre une partie de grand diamètre (10b) ayant une deuxième surface intérieure cylindrique avec un deuxième diamètre intérieur plus grand que ledit premier diamètre intérieur et ayant une surface d'extrémité frontale s'étendant radialement, ledit élément de forme annulaire ayant des dimen-sions telles que, lorsque ladite partie de petit diamètre est adaptée dans ladite rainure annulaire, ladite deuxième surface intérieure cylindrique soit au contact de la surface périphérique extérieure de ladite partie terminale (9c) et que ladite surface terminale frontale s'étendant radialement se trouve dans ledit premier plan, ledit élément de forme annulaire ayant une coupure axiale définissant deux surfaces en regard (101, 102) séparables se faisant face, ledit élément de forme annulaire étant déformable autour dudit élément cylindrique pour adapter ladite partie (10a) de petit diamètre dans ladite rainure annulaire (9a) et pour positionner ladite partie (10b) de grand diamètre sur ladite partie terminale (9c), ledit élément de forme annulaire ayant un outre une paroi postérieure (11) formant le siège (5a) s'étendant radialement entre les surfaces périphériques des parties (10a, 10b) dudit élément de forme annulaire et faisant face à la première extrémité de raccord.

2. Vanne selon la revendication 1, caractérisée en ce que l'élément cylindrique (9) est accouplé à l'élément de form annulaire (10) par élargissement temporaire dudit élément de formes annulaire en direction diamètrale et par mise de l'élément de forme annulaire déformé autour de l'élément cylindrique de sorte que la partie (10a) de petit diamètre vienne au-delà de la partie empêchant le désengagement (9c) et s'adapte dans la rainure annulaire (9a) de l'élément cylindrique.

3. Vanne selon la revendication 1, caractérisée en ce qu'une encoche (9b) est prévue dans la partie (9c) de l'élément cylindrique (9) empêchant le désengagement, obliquement par rapport à la direction axiale dudit élément, et que l'élément cylindrique est accouplé à l'élément de forme annulaire en déformant temporairement la première extrémité, à la coupure de l'élément de forme annulaire en direction axiale par rapport à la deuxième extrémité, puis en insérant ladite première extrémité dans l'encoche oblique de l'élément cylindrique, et en faisant tourner l'élément de forme annulaire par rapport à l'élément cylindrique.

# FIG. I

# FIG. 2

# FIG. 3